# EUROPÄISCHE PATENTSCHRIFT

(11) **EP 0 907 447 B1**
(45) Veröffentlichungstag und Bekanntmachung des Hinweises auf die Patenterteilung: **19.01.2000**
(21) Anmeldenummer: 97922847.5
(22) Anmeldetag: 18.04.1997
(51) Int. Cl.: B23D 51/10, B23D 61/12, B23D 49/11, B23D 51/02

(54) **ELEKTRISCHE HANDSÄGEMASCHINE**
ELECTRIC HANDSAW
SCIE ELECTRIQUE A MAIN

(30) Priorität: 22.06.1996 DE 19625081
(43) Veröffentlichungstag der Anmeldung: 14.04.1999
(73) Patentinhaber: ROBERT BOSCH GMBH, 70442 Stuttgart (DE)
(72) Erfinder: GANSEL, Eduard, D-72135 Dettenhausen (DE); LAMPRECHT, Justus, D-72144 Dusslingen (DE); ENGELFRIED, Uwe, D-73760 Ostfildern (DE); FUCHS, Rudolf, D-73765 Neuhausen (DE)
(86) Internationale Anmeldenummer: DE9700778
(87) Internationale Veröffentlichungsnummer: WO9749517

(56) Entgegenhaltungen:
- BE-A- 440 688
- DE-A- 4 139 130
- DE-A- 4 415 848
- FR-A- 680 327
- US-A- 2 422 221
- US-A- 2 854 981
- US-A- 2 931 674
- US-A- 4 876 793

## Beschreibung

### Stand der Technik

Die Erfindung betrifft eine elektrische Handsägemaschine für ein sich hin- und herbewegendes Sägeblatt der im Oberbegriff des Anspruchs 1 und 12 definierten Gattung, sowie ein zugehöriges Sägeblatt gemäß Oberbegriff von Patentanspruch 23 bzw. 26.

Bei der aus DE 44 15 848 A1 bekannten elektrischen Handsäge dieser Art zum Sägen des unteren Endes von Türzargen, um dort einen Spalt zum Unterschieben des Parketts zu schaffen besteht die Spannvorrichtung aus drei Befestigungsschrauben, mit welchen das L-förmig ausgebildete, zwei zueinander rechtwinklige Sägezahnreihen aufweisende Sägeblatt so auf der vom Maschinengehäuse abgekehrten Außenseite der Schwingplatte befestigt wird, daß je eine Sägezahnreihe über den Längsrand und über den vom Handgriff abgekehrten vorderen Querrand der Schwingplatte entsprechend weit übersteht. Die drei Befestigungsschrauben werden durch entsprechende Löcher im Sägeblatt hindurchgesteckt und in Gewindebohrungen in der Schwingplatte verschraubt.

Bei einer bekannten Handsägemaschine mit einer hin- und herbewegten Sägeblatt (DE 195 14 362 A1) ist das Feilblatt in einem Halteabschnitt eines sog. Feilaufsatzes durch Formpressen oder Gießen eingesetzt und gesichert. Rückwärtig von dem Halteabschnitt weist der Feilaufsatz einen Schlitz auf, mit dem der Feilaufsatz auf das freie Ende einer in einer hin- hergehenden Bewegung angetriebenen Platte aufgeschoben und mittels einer einrückbaren Arretierung gesichert wird.

Bei einer ebenfalls bekannten elektrischen Handsäge (US 4 819 334) sitzt das Sägeblatt über ein Kugellager auf einer über ein Winkelgetriebe angetriebenen Exzenterwelle und ist mit einem im Sägeblatt vorgesehenen Schlitz auf einem am Maschinengehäuse drehbar befestigten Führungsnocken längsverschiebbar aufgenommen. Die Sicherung des Sägeblattes gegen Abfallen erfolgt durch Klammern.

### Vorteile der Erfindung

Die erfindungsgemäße elektrische Handsägemaschine mit den kennzeichnenden Merkmalen des Anspruchs 1 hat den Vorteil, daß ein schneller Wechsel des Sägeblatts ohne Hilfswerkzeug möglich ist. Das Sägeblatt wird in entspannter Verstellung der Spannbacken aufgesetzt, und der bewegliche Spannbacken wird anschließend nach außen verlagert, wobei das Sägeblatt gegen die Auflageflächen kraftschlüssig an den Spannbacken gezogen wird.

Die erfindungsgemäße elektrische Handsägemaschine mit den kennzeichnenden Merkmalen des Anspruchs 12 hat ebenfalls den Vorteil, daß ein schneller Wechsel des Sägeblatts ohne Hilfswerkzeug möglich ist. Das Sägeblatt wird in der Ebene der Schwingplatte um 90° gedreht auf den Spannbolzen aufgesetzt und durch Rückdrehen um 90° in seine Arbeitslage automatisch durch den Spannbolzen an der Schwingplatte kraft- und formschlüssig festgelegt. Ein im Längsabstand von dem Spannbolzen in einen Schlitz im Sägeblatt einrastender Federnocken verhindert ein Drehen des Sägeblatts in der Schwingplatten- bzw. Sägeblattebene.

Mit beiden Handsägemaschinen ist ein bündiges Sägen möglich, und zwar mit Wenden des Sägeblatts wahlweise rechts- und linksbündig.

Das erfindungsgemäße Sägeblatt gemäß dem Anspruch 23 bzw. dem Anspruch 26 hat den Vorteil, an die jeweilige Spannvorrichtung optimal angepaßt zu sein. Dabei kann bei entsprechender Ausbildung der Durchbrüche im Sägeblatt erreicht werden, daß das Sägeblatt einmal mit seiner linken und einmal mit seiner rechten Blattseite an die Schwingplatte angesetzt werden kann, wodurch nach Drehen der Handsägemaschine um ihre Längsachse sowohl mit rechts vom Maschinengehäuse liegendem Sägeblatt als auch mit links vom Maschinengehäuse liegendem Sägeblatt gesägt werden kann. Damit wird die Zugänglichkeit bei linken und rechten bündigen Schnitten wesentlich verbessert und ein besseres Eckenmaß erzielt. Werden die für die Spannaufnahme im Sägeblatt vorgesehenen beiden Durchbrüche bzw. Durchbruch und Ausnehmung jeweils paarweise symmetrisch zur Mittellinie des Sägeblatts, also links und rechts von dessen Mittellinie, vorgesehen, so kann das Sägeblatt um seine Mittellinie geschwenkt und sowohl am linken als auch am rechten Ende eingespannt werden, wodurch alternativ ein links- und rechtsbündiges Sägen möglich wird.

Die elektrische Handsägemaschine mit den kennzeichnenden Merkmalen des Anspruchs 17 hat den Vorteil, daß durch diese konstruktive Maßnahme eine exakte, wenig verschleißarme Linearführung für die das Sägeblatt aufnehmende Schwingplatte zur Verfügung gestellt wird, die es ermöglicht, das Sägeblatt so zu spannen, daß das vorstehend beschriebene bündige Sägen bei einem Eckenmaß von Null möglich ist. Dies wird dadurch sichergestellt, daß anders als bei elektrischen Stich-, Multi- oder Fuchsschwanzsägen die Führung nur einseitig mit material umschlossen ist, da das U-förmige Kugelträgerblech einseitig zur Aufnahme des Werkzeugträgerblechs hin geöffnet ist. Die Rollreibung der Kugeln erzeugt weniger Verlustleistung und eine wesentlich geringere Erwärmung innerhalb der Linearführung. Kugelkäfige können eingespart werden, da die Kugeln durch die ausgeprägten Laschen im Kugelträgerblech innerhalb eines definierten Bereichs gehalten werden. Das Werkzeugträgerblech wird durch ein Pleuel gehalten und angetrieben.

Durch die in den weiteren Ansprüchen aufgeführten Maßnahmen sind vorteilhafte Weiterbildungen und Verbesserungen der im Anspruch 1 bzw. 12 bzw. 17 angegebenen elektrischen Handsägemaschine und des im Anspruch 23 bzw. 26 angegebenen Sägeblatts zum Gebrauch in dieser elektrischen Handsägemaschine möglich.

### Zeichnung

Die Erfindung ist anhand von in der Zeichnung dargestellten Ausführungsbeispielen in der nachfolgenden Beschreibung näher erläutert. Es zeigen:
- Fig. 1: eine Seitenansicht einer elektrischen Handsäge, teilweise geschnitten,
- Fig. 2: eine Seitenansicht eines Sägeblatts für die Handsäge in Fig. 1,
- Fig. 3: einen Schnitt längs der Linie III-III in Fig. 2.
- Fig. 4: einen Schnitt längs der Linie IV-IV in Fig. 2.
- Fig. 5: eine gleiche Darstellung wie in Fig. 4 eines modifizierten Sägeblatts.
- Fig. 6: ausschnittweise eine Seitenansicht einer elektrischen Handsäge gemäß einem zweiten Ausführungsbeispiel. teilweise geschnitten,
- Fig. 7: ausschnittweise eine Spannvorrichtung der Handsäge in Fig. 6 bei um 90° gedrehtem Riegelglied.
- Fig. 8: eine Seitenansicht eines Stufenbolzens in der Spannvorrichtung gemäß Fig. 6,
- Fig. 9: einen Längsschnitt eines feststehenden Spannbackens der Spannvorrichtung in Fig. 6.
- Fig.10: eine Ansicht des Spannbackens in Richtung Pfeil X in Fig. 9,
- Fig.11: ausschnittweise einen Längsschnitt einer elektrischen Handsäge gemäß einem dritten Ausführungsbeispiel,
- Fig.12: einen Schnitt gemäß Linie XII-XII in Fig. 11,
- Fig.13: eine Seitenansicht eines Spannbolzens in der Spannvorrichtung gemäß Fig. 11,
- Fig.14: eine Ansicht des Spannbolzens in Richtung Pfeil XIV in Fig. 13,
- Fig.15: eine Seitenansicht eines Sägeblatts für die Handsäge in Fig. 11 und 12,
- Fig.16: einen Schnitt längs der Linie XVI-XVI in Fig. 15,
- Fig.17: eine Unteransicht einer Schwingplatte der elektrischen Handsäge in Fig. 11 und 12,
- Fig.18: einen Schnitt längs der Linie XVIII-XVIII in Fig. 17,
- Fig.19: einen Schnitt längs der Linie XIX-XIX in Fig. 17.

### Beschreibung der Ausführungsbeispiele

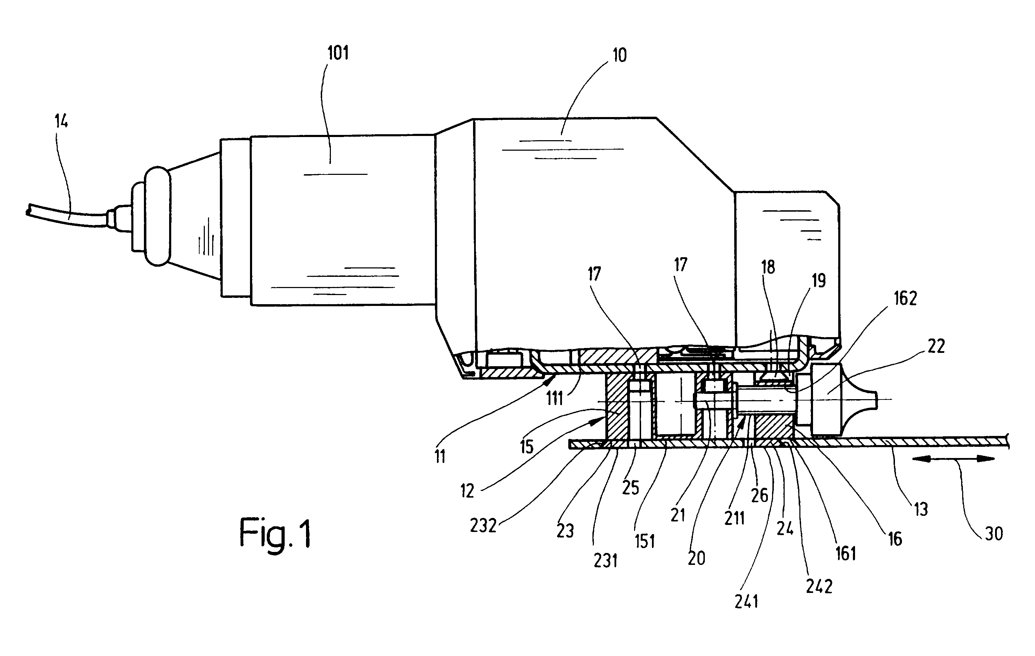

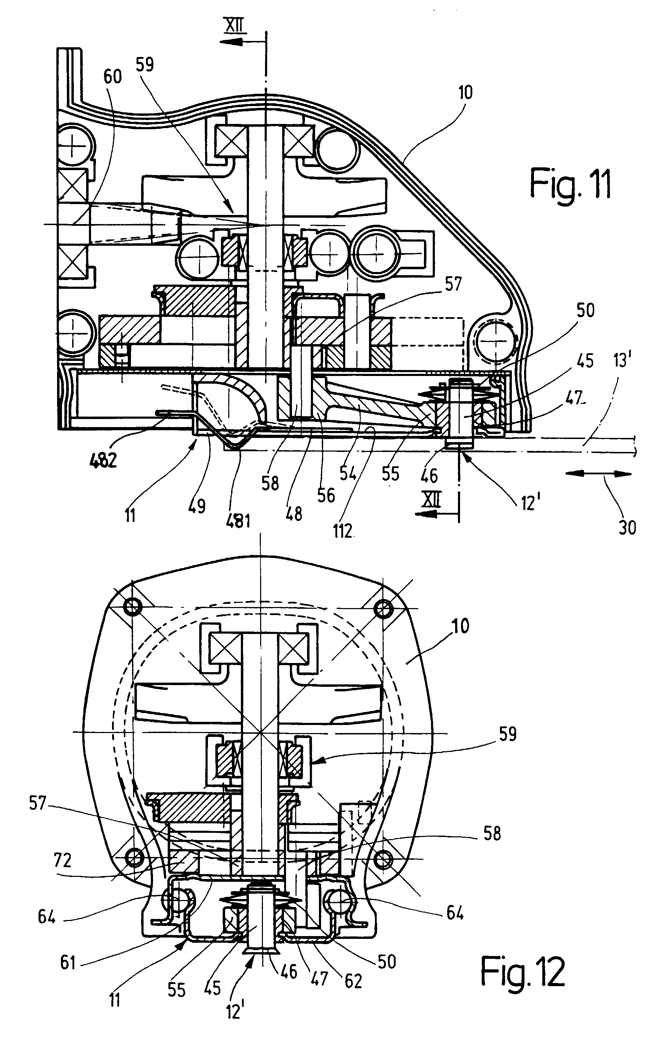

Die in Fig. 1 in Seitenansicht und teilweise geschnitten dargestellte elektrische Handsägemaschine für ein sich hin- und herbewegendes Sägeblatt, kurz Handsäge genannt, weist ein Maschinengehäuse 10, eine am Maschinengehäuse 10 verschieblich gelagerte Schwingplatte 11, einen im Maschinengehäuse 11 aufgenommenen, hier nicht dargestellten elektrischen Antrieb, der die Schwingplatte 11 in eine hin- und hergehende Längsbewegung versetzt, sowie eine Spannvorrichtung 12 zum Festlegen eines Sägeblatts 13 an der Schwingplatte 11 auf. Der rückwärtige Teil des Maschinengehäuses 10 ist als Handgriff 101 gestaltet, mit dem die Handsäge beim Sägen gehalten wird. Mit 14 ist das elektrische Anschlußkabel der Handsäge bezeichnet. Ein Beispiel eines elektrischen Antriebs, der die Schwingplatte 11 in eine hin- und hergehende Längsbewegung versetzt, ist in Fig. 11 dargestellt und wird noch später beschrieben.

Die Spannvorrichtung 12 umfaßt zwei von der vom Maschinengehäuse 10 abgekehrten Außenseite 111 der Schwingplatte 11 abstehende Spannbacken 15,16, die in Schwingrichtung der Schwingplatte 11 (vgl. Pfeil 30 in Fig. 1) voneinander beabstandet sind. Der hintere Spannbacken 15 ist dabei über zwei Befestigungsschrauben 17 fest mit der Schwingplatte 11 verbunden, während der vordere Spannbacken 16 längsverschiebbar an der Schwingplatte 11 gehalten ist, so daß der Abstand der beiden Spannbacken 15,16 voneinander veränderbar ist. Zur Herstellung der Verschiebbarkeit des vorderen Spannbackens 16 greift ein in der Schwingplatte 11 verankerter Führungszapfen 18 in eine Führungsnut 19 im Spannbacken 16 ein. Die beiden Spannbacken 15,16 sind durch eine Koppeleinheit 20 miteinander verbunden, die im Ausführungsbeispiel der Fig. 1 aus einem Gewindebolzen 21 und einem auf dem Stirnende des Gewindebolzens 21 drehfest aufgesetzten Drehknopf 22 besteht. Der Gewindebolzen 21 ist drehbar aber axial unverschiebbar im festen Spannbacken 15 gehalten und mit einem Außengewindeabschnitt 211 in einer Gewindebohrung 23 im beweglichen Spannbacken 16 verschraubbar. Durch Drehen des Drehknopfes 22 wird der bewegliche Spannbacken 16 je nach Drehrichtung des Drehknopfes 22 auf den festen Spannbacken 15 zubewegt oder von diesem entfernt. Jeder Spannbacken 15,16 trägt auf seinem von der Schwingplatte 11 abgekehrten Außenseite eine plane Auflagefläche 151 bzw. 161 zur Auflage des Sägeblatts 13 und einen über die plane Auflagefläche 151 bzw. 161 vorstehenden Spannfuß 23 bzw. 24 mit Sohle 231 bzw. 241 und Rist 232 bzw. 242. Die beiden Riste 232,242 an den beiden Spannfüßen 23,24 sind dabei in Schwingrichtung 30 der Schwingplatte 11 voneinander abgekehrt.

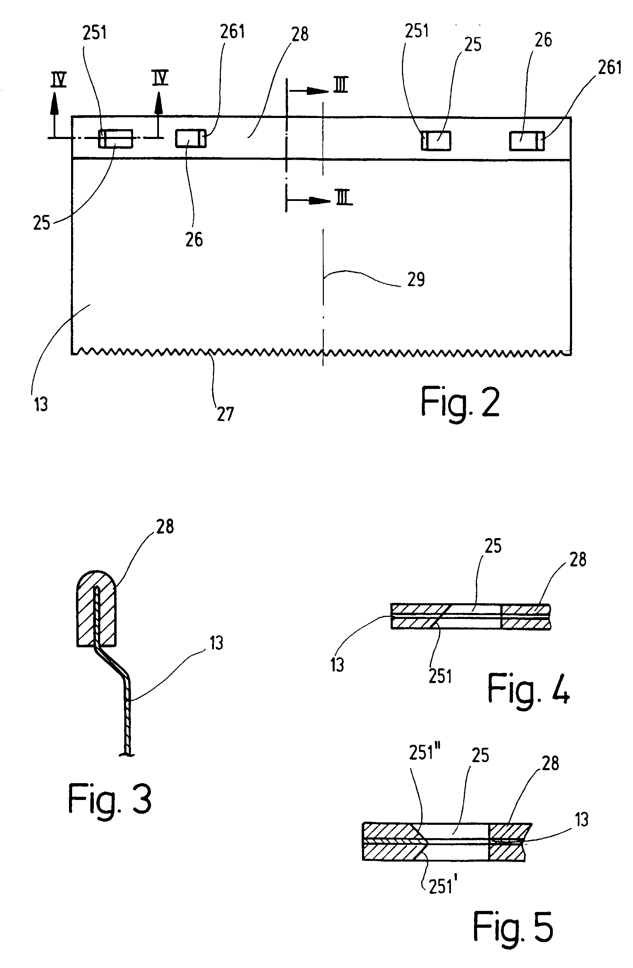

Für die Aufnahme des Sägeblatts 13 in der Spannvorrichtung 12 weist das in Fig. 2 dargestellte Sägeblatt 13 zwei Durchbrüche 25,26 auf, deren lichte Weite um zugelassene Toleranzen größer ist als die Fläche der Sohlen 231 bzw. 241 der Spannfüße 23.24. so daß das Sägeblatt 13 mit den Durchbrüchen 25,26 über die Spannfüße 23.24 hinweg bis zur Anlage an den planen Auflageflächen 151,161 der Spannbacken 15.16 aufgesetzt werden kann. Der Längsabstand der beiden Durchbrüche 25,26 ist dem Abstand der beiden Spannfüße 23.24 in Spannstellung der Spannvorrichtung 12 angepaßt. Jeder Durchbruch 25,26 weist eine in die Tiefe des Durchbruchs 25 bzw. 26 sich erstreckende, den Durchbruch 25 bzw. 26 einseitig erweiternde Einpannschräge 251 bzw. 261 auf, die den Durchbruch 25 bzw. 26 einseitig erweitert und einen solchen Anstellwinkel aufweist, daß sich der Rist 232 bzw. 242 des Spannfußes 23 bzw. 24 plan an die Einspannschräge 251 bzw. 261 anlegen kann. Die beiden Einspannschrägen 251,261 sind damit auch an voneinander abgekehrten Seiten der Durchbrüche 25.26 angeordnet, wie dies aus Fig. 2 ersichtlich ist. Wie Fig. 4 zeigt, erstreckt sich dabei jede Einpannschräge 251 von der einen Seite des Sägeblatts 13 bis hin zur anderen Seite des Sägeblatts 13, durchläuft also den gesamten Durchbruch 25 bzw. 26. In einer alternativen Ausführungsform gemäß Fig. 5 ist die Einspannschräge 251 in zwei Teilabschnitte 251' und 251" aufgeteilt, die gegensinnig zueinander verlaufen und in Durchbruchmitte aneinanderstoßen. Mit einer solchen Ausbildung der Einspannschrägen 251,261 ist es möglich. das Sägeblatt 13 sowohl mit seiner linken als auch mit seiner rechten Seite auf die planen Auflageflächen 151,162 an den Spannbacken 15,16 aufzusetzen, so daß ein Sägen mit rechts von dem Maschinengehäuse 10 stehendem Sägeblatt 13, wie dies in Fig. 1 dargestellt ist, sowie nach Drehen des Maschinengehäuses 10 um seine Längsachse ein Sägen mit links am Maschinengehäuse 10 liegendem Sägeblatt 13 möglich ist. Durch diese Wendbarkeit des Sägeblatts 13 ergibt sich eine bessere Zugänglichkeit bei linken und rechten randnahen Schnitten, da das Maschinengehäuse 10 nicht stört.

Das Sägeblatt 13 trägt im allgemeinen längs seines oberen, der Sägezahnreihe 27 gegenüberliegenden Längsrands einen Versteifungsrücken 28, in dessen Bereich die beiden Durchbrüche 25, 26 eingebracht sind. Wie aus Fig. 2 ersichtlich ist, sind dabei die beiden Durchbrüche 25.26 nahe dem linken Rand des Sägeblatts 13 angeordnet. Ein gleiches Paar von Durchbrüchen 25, 26 ist nahe dem rechten Rand des Sägeblatts 13, und zwar symmetrisch zur Mittellinie 29 des Sägeblatts 13. vorgesehen. Dadurch kann einmal das Sägeblatt 13 nahe dem linken Rand und nach Drehen um 180° um die Mittellinie 29 nahe seinem rechten Rand an der Schwingplatte 11 festgespannt werden, wodurch ein rechts- und linksbündiges Sägen mit der elektrischen Handsäge ermöglicht wird. Unterhalb des Verstärkungsrückens 28 ist das Sägeblatt 13 seitlich abgekröpft. wie dies aus der Schnittdarstellung in Fig. 3 hervorgeht.

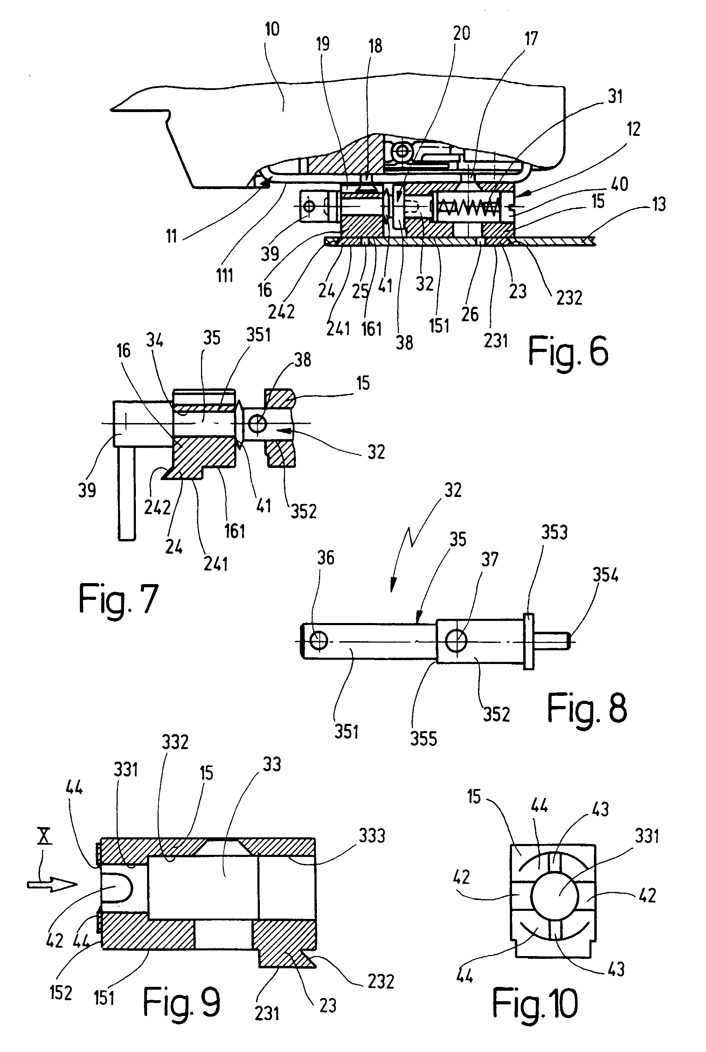

Bei der in Fig. 6 ausschnittweise dargestellten elektrischen Handsäge ist gegenüber der vorstehend beschriebenen Handsäge die Spannvorrichtung 12 modifiziert. Sie weist wiederum den in der Schwingplatte 11 starr befestigten Spannbacken 15 und den an der Schwingplatte 11 längsverschieblich befestigten Spannbacken 16 auf. die jedoch ihre Plätze getauscht haben. so daß der bewegliche Spannbacken 16 hinter dem festen Spannbacken 15 liegt. Die die beiden Spannbacken 15,16 zur Längsverschiebung des beweglichen Spannbackens 16 miteinander verbindende Koppeleinheit 20 umfaßt eine die beiden Spannbacken 15.16 auseinanderschiebende Druckfeder 31 und ein in zwei Endstellungen drehbares Riegelglied 32. das so ausgebildet ist, daß es in seiner einen Endstellung, der sog. Entriegelungsstellung, wie sie in Fig. 7 dargestellt ist, ein Verschieben des beweglichen Spannbackens 16 gegen die Druckfeder 31 ermöglicht und in seiner anderen Endstellung, der sog. Verriegelungsstellung, wie sie in Fig. 6 zu sehen ist, eine solche Verschiebebewegung blockiert. Wie aus den Einzelteilzeichnungen in Fig. 7 - 10 hervorgeht. ist im festen Spannbacken 15 eine längsdurchgehende Stufenbohrung 33 mit einem durchmesserkleineren Bohrungsabschnitt 331, der in dem dem beweglichen Spannbacken 16 zugekehrten Endbereich des festen Spannbackens 15 liegt, einem durchmessergrößeren mittleren Bohrungsabschnitt 332 und einem mit einem Innengewinde versehenen, äußeren Bohrungsabschnitt 333 koaxial eingebracht. Der bewegliche Spannbacken 16 trägt ebenfalls eine Längsbohrung 34 (Fig. 7), die mit der Stufenbohrung 33 im festen Spannbacken 15 fluchtet (Fig. 6). Das Riegelglied 32 ist als Stufenbolzen 35 (Fig. 8) mit einem durchmesserkleineren Bolzenabschnitt 351, einem durchmessergrößeren Bolzenabschnitt 352. einem Anschlagbund 353 und einem vom Anschlagbund 353 sich fortsetzenden Zapfen 354 ausgebildet. In dem Bolzenabschnitt 351 ist eine Querbohrung 36 und in dem Bolzenabschnitt 352 eine Querbohrung 37 eingebracht. In die Querbohrung 37 ist ein auf diamtralen Seiten über den Bohrungsabschnitt 352 vorstehender Querstift 38 (Fig. 6 und 7) eingepreßt. Auf die Stirnseite des durchmesserkleineren Bolzenabschnittes 351 wird nach dessen Montage stirnseitig ein Handknebel 39 (Fig. 6 und 7) aufgesetzt und in der Querbohrung 37 verrastet. Der Stufenbolzen 35 liegt mit seinem Bolzenabschnitt 351 in der Längsbohrung 34 im beweglichen Spannbacken 16 und mit seinem Bolzenabschnitt 352 im durchmesserkleineren Bohrungsabschnitt 331 der Stufenbohrung 33 im festen Spannbacken 15 ein. Der Anschlagbund 353 und der Zapfen 354 liegen innerhalb des durchmessergrößeren Bohrungsabschnitts 332 der Stufenbohrung 33. Auf den Zapfen 354 ist das eine Ende der Druckfeder 31 geführt, die sich hier an dem Anschlagbund 353 abstützt. Das andere Federende stützt sich an einer Justierschraube 40 ab (Fig. 6), die in das Innengewinde des Bohrungsabschnittes 333 eingeschraubt ist und zum Vorspannen der Druckfeder 31 dient. Zwischen der am Übergang von Bolzenabschnitt 351 zum Bolzenabschnitt 352 ausgebildeten Ringschulter 355 und der dem festen Spannbacken 15 zugekehrten Stirnseite des verschieblichen Spannbackens 16 stützt sich eine Tellerfeder 41 (Fig. 6 und 7) ab. die den Querstift 38 im Stufenbolzen 35 gegen die Stirnseite 152 des Spannbackens 15 drückt. Wie aus Fig. 9 und 10 hervorgeht, ist an dieser. dem beweglichen Spannbacken 16 zugekehrten Stirnseite 152 des festen Spannbackens 15 eine diametrale Nut 42 eingebracht und um 90° dazu gedreht eine Rastmulde 43 für den Querstift 38 eingeformt. Der Übergang von der Nut 42 zur Rastmulde 43 erfolg durch eine Auflaufschräge 44. die an der Stirnseite 152 des Spannbackens 15 axial vorsteht und ihren maximalen Vorstand im Bereich der Rastmulde 43 erreicht.

Die Wirkungsweise der beschriebenen Spannvorrichtung 12 ist wie folgt:

In der Entriegelungsstellung des Handknebels 39 (Fig. 7) ist der Querstift 38 gegenüber der Darstellung in Fig. 6 um 90° gedreht und kann unter Zusammendrücken der Druckfeder 31 in die Nut 42 im festen Spannbacken 15 eingeschoben werden. In dieser Entriegelungsstellung kann also der bewegliche Spannbacken 16 durch Axialdruck auf den Handknebel 39 in Richtung zum festen Spannbacken 15 verschoben und dabei der Abstand der Spannfüße 23.24 voneinander so verringert werden, daß das in Fig. 2 dargestellte Sägeblatt 13 mit seinen Durchbrüchen 25,26 über die Spannfüße 23,24 auf die Auflageflächen 151.161 an den Spannbacken 15,16 aufgesetzt werden kann. Mit Freigeben des Handknebels 39 schiebt die Druckfeder 31 die Spannbacken 15,16 wieder auseinander, so daß die Riste 232 und 242 der Spannfüße 23 und 24 sich auf die Einspannschrägen 251 und 261 in den Durchbrüchen 25,26 auflegen und das Sägeblatt 13 kraftschlüssig auf die Auflageflächen 151 und 161 ziehen. Nunmehr wird der Handhebel 39 in 90° um seine in Fig. 6 dargestellte Stellung gedreht, wodurch der Querstift 38 über die Auflaufschräge 44 in die Rastmulden 43 einläuft. Dabei wird der Stufenbolzen 35 etwas axial verschoben und die Klemmkraft der Spannfüße 23,24 im Sägeblatt 13 erhöht. Die Tellerfeder 41 sorgt für eine sichere Rastung des Querstiftes 38 in der Rastmulde 43 und gleicht gleichzeitig Toleranzen bei der Axialverschiebung des Stufenbolzens 35 aus. Zum Wechseln des Sägeblatts 13 ist der Handknebel 39 wieder in die in Fig. 7 dargestellte Entriegelungsstellung zu überführen. Durch Zusammenschieben der beiden Spannbacken 15,16 gegen die Druckfeder 31 läßt sich das Sägeblatt 13 von den Spannfüßen 23,24 wieder abziehen.

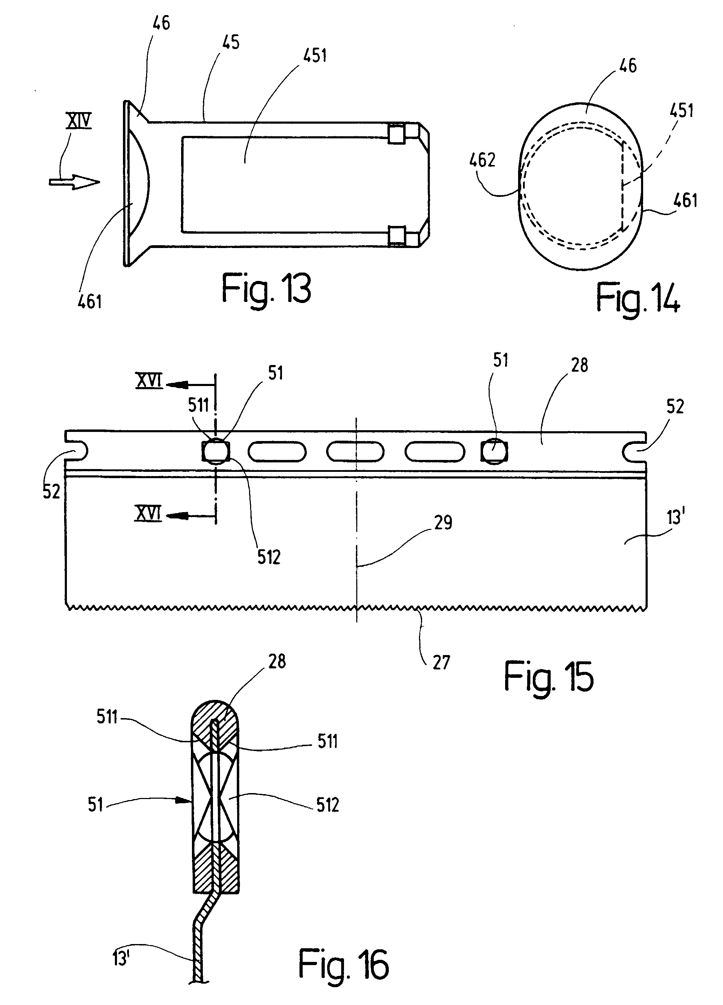

Bei der in Fig. 11 ausschnittweise im Längsschnitt dargestellten elektrischen Handsäge gemäß einem weiteren Ausführungsbeispiel weist die Spannvorrichtung 12' zum Festlegen des hier nur angedeuteten Sägeblatts 13' an der Schwingplatte 11 einen quer zur Schwingplatte 11 sich erstreckenden, axial verschieblichen Spannbolzen 45 auf, der durch die Schwingplatte 11 hindurchgeführt ist und über die vom Maschinengehäuse 10 abgekehrte Außenseite 111 der Schwingplatte 11 mit einem trichterförmigen Spannkopf 46 (Fig. 12) vorsteht. Der Spannbolzen 45 ist in einer mit der Schwingplatte 11 fest verbundenen Führungshülse 47 axial unverdrehbar aufgenommen, wozu der Spannbolzen 45, der in Fig. 13 vergrößert dargestellt ist, eine plane Fläche 451 aufweist. Mittels einer als Tellerfeder ausgebildeten Druckfeder 50, die sich einerseits auf der vom Spannkopf 46 abgekehrten Stirnseite der Führungshülse 47 und andererseits am Spannbolzen 45 abstützt, ist der Spannbolzen 45 in Einzugsrichtung hin zur Führungshülse 47 belastet. Wie aus den in Fig. 13 und 14 dargestellten vergrößerten Ansichten des Spannbolzens 45 zu erkennen ist, ist der Spannkopf 46 auf diametralen Seiten abgeflacht, wobei die beiden Abflachungen 461 und 462 sich quer (alternativ: parallel) zur Schwingrichtung 30 der Schwingplatte 11 erstrecken. Die Abflachungen 461 und 462 liegen dabei jeweils in einer von zwei parallelen, den Außenumfang des Spannbolzens 45 tangential berührenden Ebenen.

Zur Spannvorrichtung 12' gehört noch ein federnder Nocken 481, der aus einem Federblech 48 ausgebogen ist und durch einen in Schwingrichtung 30 sich erstreckenden Schlitz 49 in der Schwingplatte 11 hindurchragt und auf deren Außenseite 111 vorsteht. Das Federblech 48 ist auf der Innenseite 112 der Schwingplatte 11 befestigt, wobei das von der Befestigung abgekehrte freie Federende 482 über die Schwingplatte 11 hinausreicht und am Maschinengehäuse 10 von unten her zugänglich ist, so daß über das Federende 482 der Nocken 481 manuell durch den Schlitz 49 in der Schwingplatte 11 hinter die Außenseite 111 der Schwingplatte 11 zurückgedrückt werden kann.

Das in Fig. 15 und 16 dargestellte Sägeblatt 13' ist entsprechend an die Spannvorrichtung 12' angepaßt. Wie das Sägeblatt 13 in Fig. 2 und 3 ist an dem an der Sägezahnreihe 27 abgekehrten Längsrand des Sägeblatts 13' ein Verstärkungsrücken 28 vorgesehen, in dem symmetrisch zur Mittellinie 29 des Sägeblatts 13' ein linker und rechter Durchbruch 51 sowie eine vom Querrand aus eingebrachte Ausnehmung 52 vorgesehen sind. Die symmetrische Anordnung der Durchbrüche 51 und Ausnehmungen 52 im Sägeblatt 13' dient wieder der gewendeten Einspannung des Sägeblatts 13' in der Spannvorrichtung 12' um ein rechts- oder linksseitig bündiges Sägen zu ermöglichen. Unmittelbar unterhalb des Verstärkungsrückens 28 ist das Sägeblatt 13' wieder seitlich abgekröpft, wie dies in Fig. 16 zu sehen ist. Die parallel zu den Querkanten des Sägeblatts 13' weisende Breite der Ausnehmungen 52 ist wenig größer bemessen als die Breite des Nockens 481 der Spannvorrichtung 12'. Der Abstand zwischen einem Durchbruch 51 und der zugeordneten Ausnehmung 52 entspricht dem Abstand von Spannbolzen 45 und Nocken 481 in der Spannvorrichtung 12'.

Wie aus Fig. 15 und 16 ersehen werden kann, weist der Durchbruch 51 in Anpassung an die Trichterform des Spannkopfes 46 mit einem seitlichen Abflachungen 461 und 462 eine trichterförmige Einsenkung 511 mit einem Konuswinkel von z.B. 90° sowie eine dazu quer ausgerichtete Öffnung 512 auf, deren Umrißlinie der Kontur des seitlich abgeflachten Spannkopfes 46 (Fig. 14) angepaßt ist. Zum Aufspannen des Sägeblatts 13' sowohl mit seiner linken als auch mit seiner rechten Blattseite ist jeweils eine solche trichterförmige Einsenkung 511 von jeder Seite des Sägeblatts 13' aus in den Durchbruch 51 eingebracht.

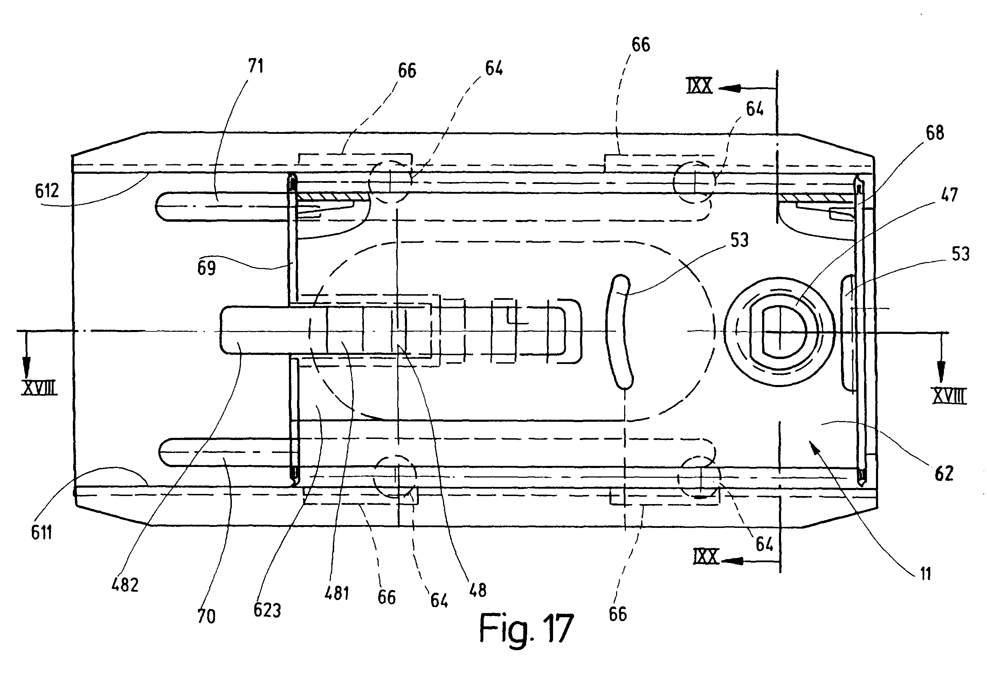

Zum Einspannen des Sägeblatts 13' in die Spannvorichtung 12' wird das Sägeblatt 13' in seiner Ebene um 90° gedreht, so daß die Sägezahnreihe 27 quer zur Schwingrichtung 30 der Schwingplatte 11 ausgerichtet ist. Dann wird das Sägeblatt 13' mit seinem Durchbruch 51 auf den Spannbolzen 45 aufgesetzt, wobei durch die Abflachungen 461 und 462 des Spannkopfes 46 die Öffnung 512 den Spannkopf 46 passieren kann, bis der Verstärkungsrücken 28 des Sägeblatts 13' an der Schwingplatte 11 anliegt. Dann wird das Sägeblatt 13' in der Ebene der Schwingplatte 11 um 90° gedreht, so daß die Sägezahnreihe 27 parallel zur Schwingrichtung 30 der Schwingplatte 11 ausgerichtet ist. Bei dieser 90°-Drehung des Sägeblatts 13' dreht sich die Einsenkung 511 im Durchbruch 51 unter den Trichterrand des trichterförmigen Spannkopfes 46, wodurch der Spannbolzen 45 gegen die Kraft der Druckfeder 50 angehoben wird und schließlich am Ende der Drehbewegung mit seinem trichterförmigen Spannkopf 46, der einen gleichen Konuswinkel wie die trichterförmige Einsenkung von z.B. 90° aufweist, sich auf die Einsenkung 511 im Durchbruch 51 auflegt. Durch die Federkraft der Druckfeder 50 wird der Spannkopf 46 bündig in die Einsenkung 511 im Durchbruch 51 eingezogen und legt dabei das Sägeblatt 13' bzw. dessen Verstärkungsrücken 28, an der Schwingplatte 11 kraftschlüssig fest. Um das Sägeblatt 13' in seine Endstellung eindrehen zu können, muß der Nocken 481 durch manuelles Betätigen des Federblechs 48 in die Schwingplatte 11 hineingedrückt werden. Wird in der Endstellung des Sägeblatts 13' das Federblech 48 wieder freigegeben, so schwenkt der Nocken 481 in die Ausnehmung 52 im Sägeblatt 13' im wesentlichen formschlüssig ein und legt das Sägeblatt 13' gegen weitere Verdrehung in der Ebene der Schwingplatte 11 fest. Für eine gute Anlage des Sägeblatts 13' an der Schwingplatte 11 sorgen zwei Auflagenocken 53 (Fig. 17), die auf der Außenseite 111 der Schwingplatte 11 im Bereich des Spannbolzens 45 im Längsabstand voneinander vorstehen.

Die Schwingplatte 11 der elektrischen Handsäge gemäß Fig. 11 und 12 wird über eine Pleuelstange 54 angetrieben, die einerseits mit einer Gleithülse 55 auf der Führungshülse 47 und andererseits mittels einer Gleithülse 56 auf einer von einem Exzenter 57 abstehenden Exzenterwelle 58, die parallel zur Führungshülse 47 ausgerichtet ist, drehbeweglich sitzt. Der Exzenter 47 wird über ein Getriebe 59 von einem Elektromotor angetrieben, dessen Abtriebswelle in Fig. 11 mit 60 bezeichnet ist. Zur Linearführung der Schwingplatte 11 ist am Maschinengehäuse ein U-förmiges Kugelträgerblech 61 festgelegt, dessen U-Öffnung vom Maschinengehäuse 10 wegweist (Fig. 17 - 19). Die in Schwingrichtung 30 der Schwingplatte 11 verlaufenden Schenkel 611,612 des Kugelträgerblechs 61 sind an ihrem freien Ende nach außen abgewinkelt. Über diese Abwinklungen ist das Kugelträgerblech 61 am Maschinengehäuse 10 befestigt, wobei auch die Außenseiten der Schenkel 611,612 zur Befestigung herangezogen werden.

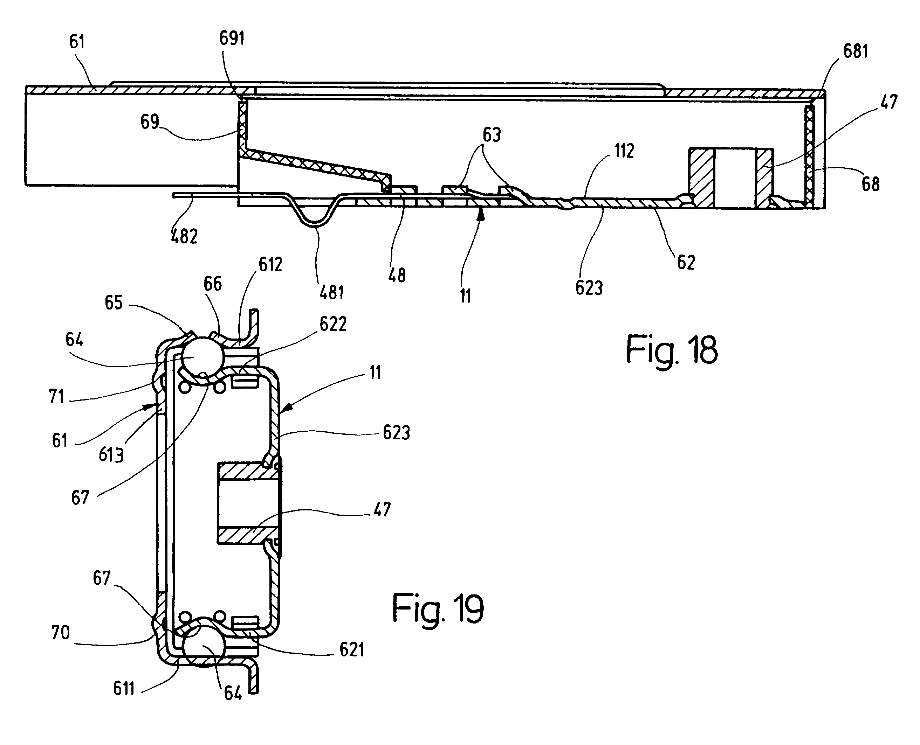

In das U-förmige Kugelträgerblech 61 greift von unten her ein U-förmiges Werkzeugträgerblech 62 so hinein, daß dessen Schenkel 621 und 622 im Parallelabstand zu den Schenkeln 611,612 des Kugelträgerblechs 61 verlaufen. Das die beiden Schenkel 621,622 verbindene Joch 623 des Werkzeugträgerblechs 62 bildet die Schwingplatte 11 mit darauf befestigter Spannvorrichtung 12', wie diese vorstehend beschrieben worden ist. In der Darstellung der Fig. 17 - 19 ist von der Spannvorrichtung 12' nur das Federblech 48 mit Nocken 481 und Federende 482 zu sehen. Der Spannbolzen 45 ist demontiert. In Fig. 18 ist sehr gut die Befestigung des Federblechs 18 auf der Innenseite 112 der Schwingplatte 11 bzw. des Jochs 623 mittels Rastnasen 63 zu sehen. Zwischen den Schenkeln 611,612 des Kugelträgerblechs 61 und den Schenkeln 621,622 des Werkzeugträgerblechs 62 stützen sich insgesamt vier Kugeln 64 ab, so daß sich eine Kugellagerführung des Werkzeugträgerblechs 62 mit Schwingplatte 11 im Kugelträgerblech 61 ergibt. Zur Halterung der Kugeln 64 sind in den Schenkeln 611,612 des Kugelträgerblechs 61 jeweils zwei Lappen 65,66 ausgestellt und in den Schenkeln 621 und 622 des Werkzeugträgerblechs 62 je eine Längsrille 67 ausgeprägt. Die Lappen 65,66 erstrecken sich dabei über einen definierten Bereich der Schenkel 611,612 (Fig. 17). Zwischen den quer zur Führungsrichtung bzw. Schwingrichtung 30 der Schwingplatte 11 sich erstreckenden vorderen und hinteren Querkanten des Werkzeugträgerblechs 62 und dem Kugelträgerblech 61 erstrecken sich zwei Abdeckkappen 68,69 aus Kunststoff, die auf der dem Kugelträgerblech 61 zugekehrten Oberseite des Werkzeugträgerblechs 62 befestigt sind und mit Dichtlippen 681 und 691 auf der dem Werkzeugträgerblech 61 zugekehrten Unterseite des Kugelträgerblechs 61 aufliegen. Wie aus Fig. 12 und 19 ersichtlich ist, sind in dem die beiden Schenkel 611,612 verbindenen Joch 613 des Kugelträgerblechs 61 zwei Längsrippen 70,71 ausgeprägt, die zur Auflage des Massenausgleichs 72 (Fig. 12) dienen. Anstelle der Lappenausstellung können in den Schenkeln 611,612 des Kugelträgerblechs 61 jeweils eine Längsrille ausgeprägt sein, die sich über den gleichen definierten Bereich erstreckt wie die Längsrillen 67 in den Schenkeln 621 und 622 des Werkzeugträgerblechs 62.

Die Erfindung ist nicht auf die beschriebenen Ausführungsbeispiele beschränkt. So sind zur Verwendung in der beschriebenen elektrischen Handsäge auch Sägeblätter vorgesehen, die nicht abgekröpft sondern eben sind, und Sägeblätter, deren Verstärkungsrücken nicht über die gesamte Sägeblattlänge reicht. Mit den letztgenannten Sägeblättern ist insbesondere ein randnahes Durchsägen möglich. Die Durchbrüche für die Spannfüße der Spannbacken fehlen in dem rückenlosen Bereich des Sägeblatts.

## Patentansprüche

1. Elektrische Handsägemaschine für ein sich hin- und herbewegendes Sägeblatt mit einem Maschinengehäuse (10), mit einer am Maschinengehäuse (10) verschieblich gelagerten Schwingplatte (11), mit einem im Maschinengehäuse (10) aufgenommenen, die Schwingplatte (11) in eine hin- und hergehende Bewegung versetzenden, elektrischen Antrieb und mit einer Spannvorrichtung (12; 12') zum Festlegen des Sägeblatts (13; 13') an der Schwingplatte (11), dadurch gekennzeichnet, daß die Spannvorrichtung (12) mindestens zwei von der vom Maschinengehäuse (10) abgekehrten Außenseite (111) der Schwingplatte (11) abstehende, in Schwingrichtung (13) der Schwingplatte (11) voneinander beabstandete Spannbacken (15, 16), die zur Abständsänderung relativ zueinander verschiebbar an der Schwingplatte (11) gehalten sind, und eine die beiden Spannbacken (15, 16) miteinander verbindende Koppeleinheit (20) aufweist, die zur Verschiebung mindestens einer der Spannbacken (15, 16) manuell betätigbar ist, daß jeder Spannbacken (15, 16) an seinem von der Schwingplatte (11) abgekehrten Ende eine plane Auflagefläche (151, 161) für das Sägeblatt (13) und einen darüber vorstehenden Spannfuß (23, 24) mit Sohle (231, 241) und Rist (232, 242) trägt und daß die Spannfüße (23, 24) zum Durchstecken durch im Sägeblatt (13) vorgesehene Durchbrüche (25, 26) und die Riste (232, 242) zur Anlage an jeweils einen Bereich an Durchbrüchen (25, 26) ausgebildeten sind, welche Bereiche vorzugsweise als Einspannschräge (251, 261) ausgestaltet sind.

2. Maschine nach Anspruch 1, dadurch gekennzeichnet, daß die Riste (232, 242) in Schwingrichtung (30) der Schwingplatte (11) weisen und auf voneinander abgekehrten Seiten der beiden Spannfüße (23, 24) liegen.

3. Maschine nach Anspruch 1 oder 2, dadurch gekennzeichnet, daß die Sohlen (231, 241) der Spannfüße (23, 24) um zugelassene Toleranzen kleiner sind als die minimale lichte Weite der sägeblattseitigen Durchbrüche (25, 26).

4. Maschine nach einem der Ansprüche 1 bis 3, dadurch gekennzeichnet, daß von den Spannbacken (15, 16), von denen der eine fest mit der Schwingplatte (11) verbunden ist, und daß die Koppeleinheit (20) einen in dem festen Spannbacken (15) drehbar und axial unverschieblich gehaltenen Gewindebolzen (21) aufweist, der mit einem Außengewindeabschnitt (211) in einer Gewindebohrung (162) im beweglichen Spannbacken (16) verschraubbar ist, und daß auf dem Stirnende des Gewindebolzens (21) ein Drehknopf (22) drehfest sitzt.

5. Maschine nach einem der Ansprüche 1 bis 3, dadurch gekennzeichnet, daß die Koppeleinheit (20) eine die beiden Spannbacken (15, 16) auseinanderschiebende Druckfeder (31) und ein in zwei Endstellungen drehbares Riegelglied (32) aufweist, das so ausgebildet ist, daß es in seiner einen Endstellung (Entriegelungsstellung) ein Verschieben des beweglichen Spannbackens (16) gegen die Druckfeder (31) ermöglicht und in seiner anderen Endstellung (Verriegelungsstellung) eine solche blockiert.

6. Maschine nach Anspruch 5, dadurch gekennzeichnet, daß das Riegelglied (32) als ein durch eine Längsbohrung (34) im beweglichen Spannbacken (16) hindurchgeführter Stufenbolzen (35) ausgebildet ist, der mit einer zwischen einem durchmesserkleineren und einem durchmessergrößeren Bolzenabschnitt (351,352) ausgebildeten Ringschulter (253) an der dem festen Spannbacken (15) zugekehrten Stirnseite des beweglichen Spannbackens (16) anliegt und in eine in dem festen Spannbacken (15) angeordnete, mit der Längsbohrung (34) fluchtende Bohrung (33) im festen Spannbacken (15) eintaucht, daß die Druckfeder (31) in der Bohrung (33) einliegt und sich einerseits am Stufenbolzen (35) und andererseits an dem festen Spannbacken (15) abstützt und daß der Stufenbolzen (35) einen diametralen, über den Bolzenumfang radial vorstehenden Querstift (38) trägt, der in der Entriegelungsstellung des Stufenbolzens (35) an der dem beweglichen Spannbacken (16) zugekehrten Stirnseite (152) des festen Spannbackens (15) anliegt und in der demgegenüber um vorzugsweise 90° gedrehten Verriegelungsstellung des Stufenbolzens (35) durch Axialverschiebung gegen die Kraft der Druckfeder (31) in eine in diese Stirnseite (152) eingebrachte, diametrale Nut (42) einschiebbar ist.

7. Maschine nach Anspruch 6, dadurch gekennzeichnet, daß die Bohrung im festen Spannbacken (15) als Stufenbohrung (33) ausgebildet ist, daß der Stufenbolzen (35) mit seinem durchmesserkleineren Bohrungsabschnitt (351) in der Längsbohrung (34) im beweglichen Spannbacken (16) und mit seinem durchmessergrößeren Bolzenabschnitt (352) in dem durchmesserkleineren Bohrungsabschnitt (331) der Stufenbohrung (33) einliegt sowie mit einem am Stirnende des durchmessergrößeren Bolzenabschnitts (352) angeordneten, über diesen radial überstehenden Anschlagbund (353) in den durchmessergrößeren Bohrungsabschnitt (332) der Stufenbohrung (33) hineinragt und daß die Druckfeder (31) im durchmessergrößeren Bohrungsabschnitt (332) der Stufenbohrung (33) angeordnet ist und sich einerseits am Anschlagbund (353) und andererseits an einer in einen Innengewindeabschnitt (333) in dem durchmessergrößeren Bohrungsabschnitt (332) eingeschraubten Justierschraube (40) abstützt.

8. Maschine nach Anspruch 6 oder 7, dadurch gekennzeichnet, daß an der dem beweglichen Spannbacken (16) zugekehrten Stirnseite (152) des festen Spannbackens (1-5) einer Rastung (43) für den Querstift (38) in der Verriegelungsstellung des Stufenbolzens (35) vorgesehen ist.

9. Maschine nach einem der Ansprüche 6 - 8, dadurch gekennzeichnet, daß zwischen der dem festen Spannbacken (15) zugekehrten Stirnseite des beweglichen Spannbackens (16) und der dieser zugekehrten Ringschulter (355) am Stufenbolzen (35) eine vorzugsweise als Tellerfeder (41) ausgebildete Druckfeder angeordnet ist.

10. Maschine nach Anspruch 9, dadurch gekennzeichnet, daß an der dem beweglichen Spannbacken (16) zugekehrten Stirnseite (152) des festen Spannbackens (15) eine Auflaufschräge (44) für den Querstift (38) vorgesehen ist, die von der Entriegelungsstellung des Stufenbolzens (35) bis zur Verriegelungsstellung des Stufenbolzens (35) axial ansteigend verläuft.

11. Maschine nach einem der Ansprüche 6 - 10, dadurch gekennzeichnet, daß auf einem aus der Längsbohrung (34) des beweglichen Spannbackens (16) vorstehenden Endabschnitt des Stufenbolzens (35) ein Handknebel (39) zum Drehen des Stufenbolzens (35) drehfest aufgesetzt ist.

12. Maschine nach dem Oberbegriff des Anspruchs 1, dadurch gekennzeichnet, daß die Spannvorrichtung (12') einen quer zur Schwingplatte (11) sich erstreckenden, axial verschieblich gehaltenen und in Verschieberichtung federbelasteten Spannbolzen (45), der durch die Schwingplatte (11) hindurchgeführt ist und über die vom Maschinengehäuse (10) abgekehrte Außenseite (111) der Schwingplatte (11) mit einem trichterförmig sich erweiternden Spannkopf (46) vorsteht, und einen davon in Schwingrichtung (30) der Schwingplatte (11) beabstandeten, federnden Nocken (481) aufweist, der durch einen Schlitz (49) in der Schwingplatte (11) hindurchragt und auf deren Außenseite (111) vorsteht, und daß der Spannkopf (46) zum formschlüssigen, etwa bündigen Einliegen in einem trichterförmigen Durchbruch (51) im Sägeblatt (13') und der Nocken (481) zum Einrasten in eine sägeblattseitige Ausnehmung (52) ausgebildet ist, die vorzugsweise von der quer zur Schwingrichtung (30) der Schwingplatte (11) liegenden Querkante des Sägeblatts (13') her in dieses eingebracht ist.

13. Maschine nach Anspruch 12, dadurch gekennzeichnet, daß der Spannkopf (46) auf diametralen Seiten abgeflacht ist und der trichterförmige Durchbruch (51) im Sägeblatt (13') so ausgebildet ist, daß das Sägeblatt (13') in einer zur Arbeitslage um 90° in der Schwingplattenebene gedrehten Position mit dem Durchbruch (51) über den seitlich abgeflachten Spannkopf (46) schiebbar ist und durch Drehen in seine Arbeitslage den Spannbolzen (45) über eine am Spannkopf (46) ausgebildete Fläche gegen die am Spannbolzen (46) angreifende Federkraft von der Außenseite (111) der Schwingplatte (11) abhebt.

14. Maschine nach Anspruch 13, dadurch gekennzeichnet, daß der Spannbolzen (45) in einer mit der Schwingplatte (11) fest verbundenen Führungshülse (47) unverdrehbar aufgenommen ist und die Federkraft von einer Druckfeder (50), vorzugsweise Tellerfeder, erzeugt wird, die sich einerseits an dem von der Schwingplatte (11) abgekehrten Ende der Führungshülse (47) und andererseits an dem aus der Führungshülse (47) vorstehenden Spannbolzenabschnitt abstützt.

15. Maschine nach einem der Ansprüche 12 - 14, dadurch gekennzeichnet, daß der Nocken (481) aus einem Federstahlblech (48) ausgebogen ist, das auf der dem Maschinengehäuse (10) zugekehrten Innenseite (112) der Schwingplatte (11) befestigt ist.

16. Maschine nach einem der Ansprüche 12 - 15, dadurch gekennzeichnet, daß auf der Außenseite (11) der Schwingplatte (11) mindestens zwei beabstandete Auflagenocken (53) für das Sägeblatt (13') vorgesehen sind, die vorzugsweise nahe dem Spannbolzen (45) angeordnet sind.

17. Maschine nach einem der Ansprüche 1 - 16, dadurch gekennzeichnet, daß die Schwingplatte (11) vom Joch (623) eines U-förmigen Werkzeugträgerblechs (62) gebildet ist, dessen Schenkel (621,622) zwischen die Schenkel (611,612) eines am Maschinengehäuse (10) festgelegten U-förmigen Kugelträgerblechs (61) hineinragen, und daß zwischen den einander zugekehrten Schenkeln (621,622 bzw. 611,612) von Werkzeugträgerblech (62) und Kugelträgerblech (61) Laufkugeln (64) angeordnet sind.

18. Maschine nach Anspruch 17, dadurch gekennzeichnet, daß die Schenkel (611,612) des Kugelträgerblechs (61) an ihren freien Enden jeweils nach außen abgewinkelt sind und daß das Kugelträgerblech (61) über die Außenseite seiner Schenkel (611,612) und diesen Abwinklungen im Maschinengehäuse (10) befestigt ist.

19. Maschine nach Anspruch 17 oder 18, dadurch gekennzeichnet, daß jede Kugel (64) zwischen einerseits zwei aus den Schenkeln (611.612) des Kugelträgerblechs (61) nach außen gegeneinander ausgestellten Lappen (65,66) oder einer eingeprägten Längsrille und andererseits einer in den Schenkeln (621,622) des Werkzeugträgerblechs (62) eingeprägten Längsrille (67) andererseits aufgenommen ist.

20. Maschine nach Anspruch 19, dadurch gekennzeichnet, daß sich die Lappen (65,66) bzw. Längsrillen über eine nur begrenzte Länge in den Schenkeln (611,612) des Kugelträgerblechs (61) erstrecken und vorzugsweise daß jeweils zwei Paare von ausgestellten Lappen (65.66) in einem Schenkel (611 bzw. 612) mit Längsabstand voneinander angeordnet sind.

21. Maschine nach einem der Ansprüche 17 - 20, dadurch gekennzeichnet, daß zwischen den quer zur Führungsrichtung ausgerichteten Querkanten des Werkzeugträgerblechs (62) und dem Kugelträgerblech (61) sich Abdeckkappen (68.69) erstrecken. die auf der dem Kugelträgerblech (61) zugekehrten Oberseite des Werkzeugträgerblechs (61) befestigt sind und mit Dichtlippen (681,691) an der dem Werkzeugträgerblech (62) zugekehrten Unterseite des Kugelträgerblechs (61) anliegen.

22. Maschine nach einem der Ansprüche 17 - 21, dadurch gekennzeichnet, daß das Werkzeugträgerblech (62) über eine Pleuelstange (64) mit einer von einem Elektromotor angetriebenen Exzenterwelle (58) gelenkig verbunden ist.

23. Sägeblatt zur Aufnahme in einer Spannvorrichtung (12) einer elektrischen Handsägemaschine nach einem der Ansprüche 1 - 11, gekennzeichnet durch mindestens zwei beabstandete Durchbrüche (25,26) deren Abstand voneinander dem Abstand der Spannfüße (23,24) der Spannvorrichtung (12) entspricht und deren lichter Querschnitt jeweils größer ist als die Sohle (231.241) der Spannfüße (23,24) und dadurch, daß jeder der Durchbrüche (25.26) an voneinander abgekehrten Durchbruchrändern mindestens einen Spannbereich für die Spannfüße (23, 24) aufweist, von denen vorzugsweise mindestens einer als in die Tiefe des Durchbruchs (25, 26) sich erstreckende, den Durchbruch (25, 26) einseitig erweiternde Einspannschräge (251, 261) zum Anlegen des Ristes (231, 241) des jeweiligen Spannfußes (23, 24) der Spannvorrichtung (12) ausgebildet ist.

24. Sägeblatt nach Anspruch 23, dadurch gekennzeichnet, daß in jedem Durchbruch (25) eine Einspannschräge (251) vorgesehen ist, die sich von der einen Blattseite bis zur anderen Blattseite über den gesamten Durchbruch (25) erstreckt (Fig. 4).

25. Sägeblatt nach Anspruch 23, dadurch gekennzeichnet, daß in jedem Durchbruch (25) zwei Einspannschrägen (251',251") vorgesehen sind, die sich jeweils gegensinnig von der Mitte des Durchbruchs (25) aus bis zu der einen und anderen Blattseite, den Durchbruch (25) von der Mitte aus erweiternd, erstrecken (Fig. 5).

26. Sägeblatt zur Aufnahme in einer Spannvorrichtung (12') einer elektrischen Handsägemaschine nach einem der Ansprüche 12 - 16, gekennzeichnet durch eine am Blattquerrand eingebrachte Ausnehmung (52) und einen im Längsabstand davon angeordneten Durchbruch (51), wobei der Längsabstand dem Abstand von Nocken (481) und Spannbolzen (45) in der Spannvorrichtung (12') entspricht, und dadurch, daß der Durchbruch (51) eine trichterförmige Einsenkung (511) mit einem den trichterförmigen Spannkopf (46) entsprechenden Konuswinkel und eine quer dazu ausgerichtete Öffnung (512) zum Durchstecken des seitlichen abgeflachten Spannkopfes (46) aufweist, deren Kontur der äußeren Umrißlinie des Spannkopfes (46) angepaßt ist.

27. Sägeblatt nach Anspruch 26, dadurch gekennzeichnet, daß je eine trichterförmige Einsenkung (511) von beiden Blattseiten aus in den Durchbruch (51) eingebracht ist.

28. Sägeblatt nach einem der Ansprüche 23 - 27, dadurch gekennzeichnet, daß zwei Paare von Durchbrüchen (25,26) bzw. zwei jeweils einen Durchbruch (51) und eine Ausnehmung (52) umfassende Paare symmetrisch zur Blattmittellinie (29) angeordnet sind.

29. Sägeblatt nach einem der Ansprüche 23 - 28, gekennzeichnet durch einen sich zumindest teilweise längs des oberen, von den Sägezähnen (27) abgekehrten Blattrandes erstreckenden Verstärkungsrücken (28) und dadurch, daß die Durchbrüche (25,26) bzw. der Durchbruch (51) und die Ausnehmung (52) im Bereich des Verstärkungsrückens (28) eingebracht sind.

30. Sägeblatt nach Anspruch 29, dadurch gekennzeichnet, daß das Blatt unmittelbar unterhalb des Verstärkungsrückens (28) seitlich abgekröpft ist.

## Claims

1. Electric hand saw machine for a reciprocating saw blade having a machine housing (10), having a vibrating plate (11), which is displaceably mounted on the machine housing (10), having an electric drive, which is accommodated in the machine housing (10) and imparts a reciprocating motion to the vibrating plate (11), and having a clamping device (12; 12') for fixing the saw blade (13; 13') to the vibrating plate (11), characterized in that the clamping device (12) has at least two clamping jaws (15, 16), which project from the outside (111), remote from the machine housing (10), of the vibrating plate (11), are spaced apart from one another in the direction (30) of vibration of the vibrating plate (11) and are held on the vibrating plate (11) such that they can be displaced relative to one another for the purpose of changing the distance between them, and a coupling unit (20), which connects the two clamping jaws (15, 16) to one another and can be actuated manually in order to displace at least one of the clamping jaws (15, 16), in that each clamping jaw (15, 16) bears, at its end which is remote from the vibrating plate (11), a planar bearing surface (151, 161) for the saw blade (13) and a clamping foot (23, 24), which protrudes beyond this bearing surface, with a sole (231, 241) and instep (232, 242), and in that the clamping feet (23, 24) are designed to be inserted through apertures (25, 26) provided in the saw blade (13) and the insteps (232, 242) are designed to bear against in each case one region on apertures (25, 26), which regions are preferably configured as oblique clamping surfaces (251, 261).

2. Machine according to Claim 1, characterized in that the insteps (232, 242) face in the direction (30) of vibration of the vibrating plate (11) and are situated on mutually opposite sides of the two clamping feet (23, 24).

3. Machine according to Claim 1 or 2, characterized in that the soles (231, 241) of the clamping feet (23, 24) are smaller by permitted tolerances than the minimum clear width of the saw-blade-side apertures (25, 26).

4. Machine according to one of Claims 1 to 3, characterized in that one of the clamping jaws (15, 16) is fixedly connected to the vibrating plate (11), and in that the coupling unit (20) has a threaded bolt (21), which is held rotatably and axially undisplaceably in the fixed clamping jaw (15) and can be screwed by means of an external threaded section (211) into a threaded bore (162) in the movable clamping jaw (16), and in that a rotary knob (22) is located in a manner which is fixed in terms of rotation on the end of the threaded bolt (21).

5. Machine according to one of Claims 1 to 3, characterized in that the coupling unit (20) has a compression spring (31), which pushes the two clamping jaws (15, 16) apart, and a locking member (32), which can be rotated into two limit positions and is designed such that, in one of its limit positions (unlocking position), it permits displacement of the movable clamping jaw (16) towards the compression spring (31) and, in its other limit position (locking position), it blocks such a displacement.

6. Machine according to Claim 5, characterized in that the locking member (32) is designed as a stepped bolt (35), which is guided through a longitudinal bore (34) in the movable clamping jaw (16), bears by means of an annular shoulder (253), which is formed between a bolt section (351) of smaller diameter and a bolt section (352) of larger diameter, against that end side of the movable clamping jaw (16) which faces the fixed clamping jaw (15), and enters into a bore (33) in the fixed clamping jaw (15), which bore is arranged in the fixed clamping jaw (15) and is aligned with the longitudinal bore (34), in that the compression spring (31) lies in the bore (33) and is supported, on one side, against the stepped bolt (35) and, on the other side, against the fixed clamping jaw (15), and in that the stepped bolt (35) has a diametrical transverse pin (38), which protrudes radially beyond the circumference of the bolt, bears, in the unlocking position of the stepped bolt (35), against that end side (152) of the fixed clamping jaw (15) which faces the movable clamping jaw (16) and, in the locking position, which is rotated through preferably 90° relative to the former position, of the stepped bolt (35) can be pushed into a diametrical groove (42), made in this end side (152), by axial displacement counter to the force of the compression spring (31).

7. Machine according to Claim 6, characterized in that the bore in the fixed clamping jaw (15) is formed as a stepped bore (33), in that the stepped bore (35) rests with its bore section (351) of smaller diameter in the longitudinal bore (34) in the movable clamping jaw (16) and with its bolt section (352) of larger diameter in the bore section (331) of smaller diameter of the stepped bore (33) and projects, by means of a stop collar (353), which is arranged at the end of the bolt section (352) of larger diameter and protrudes radially beyond the latter, into the bore section (332) of larger diameter of the stepped bore (33), and in that the compression spring (31) is arranged in the bore section (332) of larger diameter of the stepped bore (33) and is supported, on one side, against the stop collar (353) and, on the other side, against an adjusting screw (40), which is screwed into an internal threaded section (333) in the bore section (332) of larger diameter.

8. Machine according to Claim 6 or 7, characterized in that a latch (43) for the transverse pin (38) in the locking position of the stepped bolt (35) is provided at that end side (152) of the fixed clamping jaw (15) which faces the movable clamping jaw (16).

9. Machine according to one of Claims 6-8, characterized in that a compression spring, which is preferably designed as a disc spring (41), is arranged between that end side of the movable clamping jaw (16) which faces the fixed clamping jaw (15) and the annular shoulder (355), which faces the said end side, on the stepped bolt (35).

10. Machine according to Claim 9, characterized in that an oblique run-up surface (44) for the transverse pin (38) is provided on that end side (152) of the fixed clamping jaw (15) which faces the movable clamping jaw (16), which run-up surface runs in such a manner as to rise axially from the unlocking position of the stepped bolt (35) to the locking position of the stepped bolt (35).

11. Machine according to one of Claims 6-10, characterized in that a locking handle (39) for rotating the stepped bolt (35) is fitted in a manner fixed in terms of rotation on an end section, which protrudes out of the longitudinal bore (34) of the movable clamping jaw (16), of the stepped bolt (35).

12. Machine according to the preamble of Claim 1, characterized in that the clamping device (12') has a clamping bolt (45), which extends transversely with respect to the vibrating plate (11), is held axially displaceably, is spring-loaded in the direction of displacement, is guided through the vibrating plate (11) and, by means of a clamping head (46) which widens in a funnel-shaped manner, protrudes beyond the outside (111), remote from the machine housing (10), of the vibrating plate (11), and a resilient projection (481), which is spaced apart from the said clamping bolt in the direction (30) of vibration of the vibrating plate (11), projects through a slot (49) in the vibrating plate (11) and protrudes on the outside (111) thereof, and in that the clamping head (46) is designed to lie in a form-fitting approximately flush manner in a funnel-shaped aperture (51) in the saw blade (13') and the projection (481) is designed to latch into a saw-blade-side recess (52), which is preferably made in the saw blade from the transverse edge, which is situated transversely with respect to the direction (30) of vibration of the vibrating plate (11), of the saw blade (13').

13. Machine according to Claim 12, characterized in that the clamping head (46) is flattened on diametrical sides and the funnel-shaped aperture (51) in the saw blade (13') is designed such that the saw blade (13') can be pushed into a position, which is rotated through 90° with respect to the operating position in the plane of the vibrating plate, with the aperture (51) over the laterally flattened clamping head (46) and, by being rotated into its operating position, via a surface formed on the clamping head (46) lifts the clamping bolt (45) off the outside (111) of the vibrating plate (11), counter to the spring force acting on the clamping bolt (45).

14. Machine according to Claim 13, characterized in that the clamping bolt (45) is accommodated in an unrotatable manner in a guide sleeve (47), which is fixedly connected to the vibrating plate (11), and the spring force is produced by a compression spring (50), preferably a disc spring, which is supported, on one side, against that end of the guide sleeve (47) which is remote from the vibrating plate (11) and, on the other side, against the clamping bolt section which protrudes out of the guide sleeve (47).

15. Machine according to one of Claims 12-14, characterized in that the projection (481) is bent out of a spring steel plate (48) which is fastened to the inside (112), facing the machine housing (10), of the vibrating plate (11).

16. Machine according to one of Claims 12-15, characterized in that at least two bearing projections (53), which are spaced apart, are provided for the saw blade (13') on the outside (111) of the vibrating plate (11), which projections are preferably arranged close to the clamping bolt (45).

17. Machine according to one of Claims 1-16, characterized in that the vibrating plate (11) is formed by the yoke (623) of a U-shaped tool carrier plate (62), the limbs (621, 622) of which project between the limbs (611, 612) of a U-shaped ball carrier plate (61), which is fixed to the machine housing (10), and in that running balls (64) are arranged between the mutually facing limbs (621, 622 and 611, 612, respectively) of tool carrier plate (62) and ball carrier plate (61).

18. Machine according to Claim 17, characterized in that the limbs (611, 612) of the ball carrier plate (61) are in each case angled off outwards at their free ends, and in that the ball carrier plate (61) is fastened in the machine housing (10) by means of the outside of its limbs (611, 612) and these angled-off portions.

19. Machine according to Claim 17 or 18, characterized in that each ball (64) is accommodated between, on the one hand, two tabs (65, 66), which are deflected outwardly towards one another out of the limbs (611, 612) of the ball carrier plate (61), or a stamped-in longitudinal groove and, on the other hand, a longitudinal groove (67) formed in the limbs (621, 622) of the tool carrier plate (62).

20. Machine according to Claim 19, characterized in that the tabs (65, 66) or longitudinal grooves extend over only a limited length in the limbs (611, 612) of the ball carrier plate (61) and preferably in that in each case two pairs of deflected tabs (65, 66) are arranged at a longitudinal spacing distance from one another in a limb (611 or 612, respectively).

21. Machine according to one of Claims 17-20, characterized in that cover caps (68, 69) extend between the transverse edges, directed transversely with respect to the guidance direction, of the tool carrier plate (62) and the ball carrier plate (61), which caps are fastened to the upper side, facing the ball carrier plate (61), of the tool carrier plate (62) and bear by means of sealing lips (681, 691) against the underside, facing the tool carrier plate (62), of the ball carrier plate (61).

22. Machine according to one of Claims 17-21, characterized in that the tool carrier plate (62) is connected in an articulated manner, by means of a connecting rod (64), to an eccentric shaft (58) which is driven by an electric motor.

23. Saw blade to be held in a clamping device (12) of an electric hand saw machine according to one of Claims 1-11, characterized by at least two apertures (25, 26), which are spaced apart at a distance which corresponds to the distance between the clamping feet (23, 24) of the clamping device (12) and the clear cross-section of which is in each case larger than the sole (231, 241) of the clamping feet (23, 24), and characterized in that each of the apertures (25, 26), at aperture edges which are remote from one another, has at least one clamping region for the clamping feet (23, 24), at least one of which edges is preferably designed as an oblique clamping surface (251, 261), which extends into the depth of the aperture (25, 26) and widens the aperture (25, 26) on one side, to support the instep (231, 241) of the respective clamping foot (23, 24) of the clamping device (12).

24. Saw blade according to Claim 23, characterized in that an oblique clamping surface (251), which extends from one side of the blade to the other side of the blade over the entire aperture (25), is provided in each aperture (25) (Fig. 4).

25. Saw blade according to Claim 23, characterized in that two oblique clamping surfaces (251', 251") are provided in each aperture (25), which surfaces in each case extend in opposite directions, starting from the centre of the aperture (25), as far as either side of the blade so as to widen the aperture (25) starting from the centre (Fig. 5).

26. Saw blade to be held in a clamping device (12') of an electric hand saw machine according to one of Claims 12-16, characterized by a recess (52) made on the transverse edge of the blade and an aperture (51) arranged at a longitudinal spacing therefrom, the longitudinal spacing corresponding to the distance between projection (481) and clamping bolt (45) in the clamping device (12'), and characterized in that the aperture (51) has a funnel-shaped depression (511), with a cone angle corresponding to the funnel-shaped clamping head (46), and an opening (512), which is directed transversely thereto, for the laterally flattened clamping head (46) to pass through, the contour of which opening is matched to the outer outline of the clamping head (46).

27. Saw blade according to Claim 26, characterized in that in each case one funnel-shaped depression (511) is made in the aperture (51) from both sides of the blade.

28. Saw blade according to one of Claims 23-27, characterized in that two pairs of apertures (25, 26) or two pairs in each case comprising an aperture (51) and a recess (52) are arranged symmetrically with respect to the centre line (29) of the blade.

29. Saw blade according to one of Claims 23-28, characterized by a reinforcing spine (28), which extends at least partially along the upper edge, remote from the saw teeth (27), of the blade, and characterized in that the apertures (25, 26) or the aperture (51) and the recess (52) are made in the region of the reinforcing spine (28).

30. Saw blade according to Claim 29, characterized in that the blade is offset laterally directly beneath the reinforcing spine (28).

## Revendications

1. Scie à main électrique pour une lame de scie animée d'un mouvement de va-et-vient, comprenant un carter de machine (10), un plateau oscillant (11) monté de façon à coulisser sur le carter de machine (10), un mécanisme électrique d'entraînement qui est logé dans le carter de machine (10) et qui imprime au plateau oscillant (11) un mouvement de va-et-vient, et un dispositif de serrage (12, 12') qui sert à fixer la lame de scie (13, 13') sur le plateau oscillant (11),
caractérisé en ce que
• le dispositif de serrage (12)présente au moins deux mâchoire de serrage (15 et 16) qui se dressent à partir du côté extérieur (111) du plateau oscillant (11) situé à l'opposé du carter de machine (10) et qui sont à une certaine distance l'une de l'autre dans le sens des oscillations du plateau oscillant (11), mâchoire de serrages (15 et 16) qui, pour qu'on puisse faire varier leur écartement, sont fixées de façon à pouvoir coulisser l'une par rapport à l'autre sur le plateau oscillant (11).
• L'une des deux mâchoires de serrage (15, 16) présente une unité d'accouplement (20) qui les relie l'une à l'autre et qui peut être actionnée manuellement pour faire coulisser au moins l'une des mâchoire de serrages (15, 16),
• chaque mâchoire de serrage (15, 16) porte à son extrémité située à l'opposé du plateau oscillant (11), une surface plane d'appui (151, 161) pour la lame de scie (13) et un pied de serrage (23, 24) en saillie dessus, avec une semelle (231, 241) et un chanfrein (232, 242), et
• les pieds de serrage (23, 24) sont configurés pour être enfilés à travers des ajours (25, 26) prévus dans la lame de scie (13) et les chanfreins (232, 242) pour venir respectivement en appui sur une zone des ajours (25, 26), laquelle zone est de préférence configurée sous la forme d'un biais de mise en serrage (251, 261).

2. Machine selon la revendication 1,
caractérisée en ce que
les chanfreins (232, 242) sont orientés dans le sens d'oscillation (30) du plateau oscillant (11) et se trouvent sur des côtés des deux pieds de serrage (23, 24) qui se tournent le dos.

3. Machine selon la revendication 1 ou 2,
caractérisée en ce que
les semelles (231, 241) des pieds de serrage (23, 24) sont plus petits, de la valeur des tolérances permises, que l'ouverture libre minimale des ajours (25, 26) situés du côté de la lame de scie.

4. Machine selon l'une des revendications 1 à 3,
caractérisée en ce que
• l'une des mâchoire de serrages (15, 16) est reliée de façon solidaire au plateau oscillant (11),
• l'unité d'accouplement (20) présente un axe fileté (21) qui peut tourner dans la mâchoire de serrage fixe (15), et un axe fileté (21) qui est maintenu sans pouvoir coulisser axialement et qui peut être vissé dans un alésage fileté (162) dans la mâchoire de serrage mobile (16), et
• sur l'extrémité de l'axe fileté (21) repose un bouton tournant (22) solidaire en rotation.

5. Machine selon l'une des revendications 1 à 3,
caractérisée en ce que
l'unité d'accouplement (20) présente un ressort de compression (31) qui écarte les deux mâchoires de serrage (15, 16), et un organe de verrouillage (32) qui peut tourner pour venir dans deux positions finales, et qui est constitué de telle sorte qu'il permette, quand il est dans l'une de ses positions finales (sa position de déverrouillage) un coulissement de la mâchoire de serrage mobile (16) à l'encontre du ressort de compression (31) et, quand il est dans son autre position finale (sa position de verrouillage), bloque celui-ci.

6. Machine selon la revendication 5,
caractérisée en ce que
• l'organe de verrouillage (32) est constitué sous la forme d'un axe à gradin (35) qui passe à travers un alésage longitudinal (34) dans la mâchoire de serrage mobile (16), axe à gradins qui repose par un épaulement annulaire (253) constitué entre une section d'axe (351, 352) de plus petit diamètre et une section d'axe (351, 352) de plus grand diamètre, sur la face frontale de la mâchoire de serrage mobile (16) qui est tournée vers la mâchoire de serrage fixe (15), et plonge dans un alésage (33) disposé dans la mâchoire de serrage fixe (15), aligné avec l'alésage longitudinal (34),
• le ressort de compression (31) est inséré dans l'alésage (33) et prend appui d'une part sur l'axe à gradin (35) et d'autre part sur la mâchoire de serrage fixe (15), et
• l'axe à gradin (35) porte une tige transversale (38) diamétrale, faisant saillie radialement sur le pourtour de l'axe, tige transversale qui repose, quand l'axe à gradin (35) est dans sa position de déverrouillage, sur le côté frontal (152) de la mâchoire de serrage fixe (15) qui est tourné vers la mâchoire de serrage mobile (16) et que l'on peut faire coulisser, quand on a fait tourner l'axe à gradins (35) pour l'amener dans la position de verrouillage, de préférence de 90° par rapport à la précédente, par une translation axiale à l'encontre de la force du ressort de compression (31), dans une rainure (42) diamétrale pratiquée dans cette face frontale (152).

7. Machine selon la revendication 6,
caractérisée en ce que
• l'alésage est constitué dans la mâchoire de serrage fixe (15) sous la forme d'un alésage à gradin (33),
• l'axe à gradins (35) est inséré par sa section (351) de plus petit diamètre dans l'alésage longitudinal (34) de la mâchoire de serrage mobile (16) et par sa section (352) de plus grand diamètre dans la section d'alésage (331) de plus grand diamètre de l'alésage à gradin (33), et pénètre avec un collet de butée (353) disposé à l'extrémité frontale de la section d'axe (352) de plus grand diamètre, et qui vient en saillie radialement sur celle-ci, dans la section (332) de plus grand diamètre de l'alésage à gradins (33) et
• le ressort de compression (31) est disposé dans la section d'alésage (332) de plus grand diamètre de l'alésage à gradins (33) et prend appui d'une part sur le collet de butée (353) et d'autre part sur une vis de réglage (40) vissée dans une section filetée intérieure (333) de la section d'alésage (332) de plus grand diamètre.

8. Machine selon la revendication 6 ou 7,
caractérisée en ce que
sur la face frontale (152) de la mâchoire de serrage fixe (15) qui est tourné vers la mâchoire de serrage mobile (16), il est prévu un encliquetage (43) pour la tige transversale (38) quand l'axe à gradins (35) est dans sa position de verrouillage.

9. Machine selon l'une des revendications 6 à 8,
caractérisée en ce que
entre le côté frontal de la mâchoire de serrage mobile (16) qui est tourné vers la mâchoire de serrage fixe (15), et l'épaulement annulaire (355) qui est tourné vers celle-ci sur l'axe à gradin (35), on dispose un ressort de compression constitué de préférence sous la forme d'un ressort à disques (41).

10. Machine selon la revendication 9,
caractérisée en ce que
sur le côté frontal (152) de la mâchoire de serrage fixe (15) qui est tourné vers la mâchoire de serrage mobile (16), il est prévu un chanfrein d'entrée (44) pour la tige transversale (38), qui s'étend en augmentant axialement depuis la position de déverrouillage de l'axe à gradin (35) jusqu'à la position de verrouillage de l'axe à gradin (35).

11. Machine selon l'une des revendications 6 à 10,
caractérisée en ce que
sur une section terminale de l'axe à gradin (35) qui fait saillie à partir de l'alésage longitudinal (34) de la mâchoire de serrage mobile (16), on monte de façon solidaire en rotation une manette (39) qui sert à faire tourner l'axe à gradin (35).

12. Machine selon le préambule de la revendication 1,
caractérisée en ce que
• le dispositif de serrage (12') présente un axe de serrage (45) qui s'étend perpendiculairement au plateau oscillant (11), qui est maintenu de façon à coulisser axialement et qui est comprimé par un ressort dans le sens du coulissement, axe de serrage (45) que l'on fait passer à travers le plateau oscillant (11) et qui fait saillie sur le côté extérieur (111) du plateau oscillant (11) tourné à l'opposé du carter de machine (10), avec une tête de serrage (46) en forme d'entonnoir qui va en s'élargissant, et une came (481) qui fait ressort à une certaine distance de là dans le sens d'oscillation (30) du plateau oscillant (11) et passe à travers une fente (49) du plateau oscillant (11) en faisant saillie sur son côté extérieur (111), et
• la tête de serrage (46) est constituée pour entrer par complémentarité de forme, à peu près à fleur, dans un ajour en forme d'entonnoir (51) de la lame de scie (13'), et la came (481) est constituée pour venir s'encliqueter dans un évidement (52) situé du côté de la lame de scie, évidement qui est réalisé de préférence dans celle-ci à partir du bord transversal de la lame de scie (13') et situé perpendiculairement au sens des oscillations (30) du plateau oscillant (11).

13. Machine selon la revendication 12,
caractérisée en ce que
• la tête de serrage (46) est aplatie sur des côtés diamétralement opposés, et
• l'ajour (51) en forme d'entonnoir est constitué dans la lame de scie (13') de telle sorte que la lame de scie (13') puisse coulisser dans une position tournée à 90° dans le plan du plateau oscillant (11) par rapport à sa position de travail, avec l'ajour (51) sur la tête de serrage (46) aplatie latéralement et, en tournant pour venir dans sa position de travail, soulève l'axe de serrage (45) sur une surface constituée sur la tête de serrage (46), à l'encontre de la force du ressort venant en prise sur l'axe de serrage (46), à partir du côté extérieur (111) du plateau oscillant (11).

14. Machine selon la revendication 13,
caractérisée en ce que
• l'axe de serrage (45) est logé sans pouvoir tourner dans un manchon de guidage (47) relié de façon solidaire au plateau oscillant (11), et
• on produit la force d'un ressort de compression (50), de préférence un ressort à disques, qui prend appui d'une part à l'extrémité du manchon de guidage (47) tournée à l'opposé du plateau oscillant (11), et d'autre part sur la section de l'axe de serrage qui fait saillie à partir du manchon de guidage (47).

15. Machine selon l'une des revendications 12 à 14,
caractérisée en ce que
la came (481) est coudée à partir d'une tôle en acier à ressort (48) fixée sur le côté intérieur (112) du plateau oscillant (11) qui est tourné vers le carter de machine (10).

16. Machine selon l'une des revendications 12 à 15,
caractérisée en ce que
sur le côté extérieur du plateau oscillant (11), il est prévu au moins deux cames d'appui (53) situées à une certaine distance l'une de l'autre pour la lame de scie (13'), cames qui sont disposées de préférence à proximité de l'axe de serrage (45).

17. Machine selon l'une des revendications 1 à 16,
caractérisée en ce que
• le plateau oscillant (11) est formé par le joug (623) d'une tôle de support d'outil (62) en forme d'U dont les branches (621, 622) pénètrent entre les branches (611, 612) d'une tôle de support de billes (61) en forme d'U qui est fixée sur le carter de machine (10), et
• entre les branches (621, 622 ou 611, 612) tournées les unes vers les autres, de la tôle de support d'outil (62), et la tôle de support de billes (61), on dispose des billes de roulement (64).

18. Machine selon la revendication 17,
caractérisée en ce que
• les branches (611, 612) de la tôle de support de billes (61) sont repliées respectivement vers l'extérieur à leur extrémités libres, et
• la tôle de support de billes (61) est fixée sur le côté extérieur de ses branches (611 et 612) et de ces repliements dans le carter de machine (10).

19. Machine selon la revendication 17 ou 18,
caractérisée en ce que
chaque bille (64) est logée entre d'une part deux languettes (65, 66) formées à partir des branches (611, 612) de la tôle de support de billes (61), vers l'extérieur l'une de l'autre, ou d'une nervure longitudinale estampée, et d'autre part une nervure longitudinale (67) estampée dans les branches (621 et 622) de la tôle de support d'outil (62).

20. Machine selon la revendication 19,
caractérisée en ce que
• les languettes (65 et 66) ou les nervures longitudinales ne s'étendent que sur une longueur limitée dans les branches (661 et 612) de la tôle de support de billes (61) et, de préférence
• respectivement deux paires de languettes (65 et 66), formées à partir d'une branche (611 ou 612), sont disposées à une certaine distance l'une de l'autre dans le sens de la longueur.

21. Machine selon l'une des revendications 17 à 20,
caractérisée en ce que
entre les bords transversaux de la tôle de support d'outil (62) qui est orientée dans le sens du guidage, et la tôle de support de billes (61), s'étendent des chapeaux de recouvrement (68, 69) fixés sur la face supérieure de la tôle de support d'outil (62) qui est tournée vers la tôle de support de billes (61), et qui reposent par des lèvres d'étanchéité (681, 691) sur la face inférieure de la tôle de support des bille (61) qui est tournée vers la tôle de support d'outil (62).

22. Machine selon l'une des revendications 17 à 21,
caractérisée en ce que
la tôle de support d'outil (62) est reliée de façon articulée, au moyen d'une tige de bielle (64), à l'arbre d'excentrique(58) entraîné par un moteur électrique.

23. Lame de scie destinée à être logée dans un dispositif de serrage (12) d'une scie à main électrique, selon l'une des revendications 1 à 11,
caractérisée par
• au moins deux ajours (25, 26) situés à une certaine distance l'un de l'autre, dont l'écartement l'un de l'autre correspond à l'écartement des pieds de serrage (23, 24) du dispositif de serrage (12) et dont la section transversale libre est respectivement plus grande que la semelle (231, 241) des pieds de serrage (23, 24), et
• chacun des ajours (25, 26) présente sur les bords situés à l'opposé l'un de l'autre, au moins une zone de serrage pour les pieds de serrage (23 et 24), dont de préférence l'une au moins est constituée sous la forme d'un biais de mise en serrage (251, 261) qui s'étend dans la profondeur de l'ajour (25, 26) et qui élargit d'un côté l'ajour (25, 26) pour mettre en appui le chanfrein (231, 241) du pied de serrage correspondant (23, 24) du dispositif de serrage (12).

24. Lame de scie selon la revendication 23,
caractérisée en ce que
dans chaque ajour (25) est prévu un chanfrein de mise en serrage (251) qui s'étend depuis l'un des côtés de la lame jusqu'à l'autre côté, sur tout l'ajour (25) (figure 4).

25. Lame de scie selon la revendication 23,
caractérisée en ce que
dans chaque ajour (25) sont prévus deux chanfreins de mise en serrage (251' et 251") qui s'étendent respectivement en sens contraire depuis le milieu de l'ajour (25) jusqu'à l'un ou l'autre côté de la lame, en élargissant l'ajour (25) à partir du milieu (figure 5).

26. Lame de scie destinée à être logée dans un dispositif de serrage (12') d'une scie à main électrique, selon l'une des revendications 12 à 16,
caractérisée par
• un évidement (52), pratiqué sur le bord transversal, de la lame, et un ajour (51) disposé à une certaine distance de là dans le sens longitudinal, la distance longitudinale correspondant à l'écartement de la came (481) et de l'axe de serrage (45) dans le dispositif de serrage (12'), et
• l'ajour (51) présente une creusure (511) en forme d'entonnoir, avec un angle de cône qui correspond à celui de la tête de serrage (46) en forme d'entonnoir, et une ouverture (512) orientée perpendiculairement à cela pour enfiler à travers celle-ci la tête de serrage (46) aplatie latéralement, dont le contour est adapté à la ligne extérieure de contour de la tête de serrage (46).

27. Lame de scie selon la revendication 26,
caractérisée en ce qu'
on réalise respectivement une creusure (511) en forme d'entonnoir à partir des deux côtés de la lame dans l'ajour (51).

28. Lame de scie selon l'une des revendications 23 à 27,
caractérisée en ce qu'
on dispose deux paires d'ajours (25, 26) ou deux paires comprenant respectivement un ajour (51) et un évidement (52), de façon symétrique par rapport à la ligne médiane de la lame.

29. Lame de scie selon l'une des revendications 23 à 28,
caractérisée par
• un dos de renforcement (28) qui s'étend au moins en partie le long du bord supérieur de la lame qui est situé à l'opposé des dents de scie (27), et
• les ajours (25, 26) ou l'ajour (51) et l'évidement (52) sont pratiqués dans la zone du dos de renforcement (28).

30. Lame de scie selon la revendication 29,
caractérisée en ce que
la lame est déportée latéralement directement en dessous du dos de renforcement (28).
